# EUROPEAN PATENT SPECIFICATION

(11) **EP 2 490 326 B1**
(45) Date of publication and mention of the grant of the patent: **09.08.2017**
(21) Application number: 11154934.1
(22) Date of filing: 18.02.2011
(51) Int. Cl.: H02M 3/158

(54) **DC/DC converter with standby mode operation**
DC/DC-Wandler mit Bereitschaftsbetrieb
Convertisseur CC-CC avec fonctionnement en mode veille

(43) Date of publication of application: 22.08.2012
(73) Proprietor: Rohm Co., Ltd., Kyoto-shi, Kyoto 615-8585 (JP)
(72) Inventor: Harada, Shoichi, 40547, Düsseldorf (DE)
(74) Representative: Isarpatent

(56) References cited:
- WO-A1-2009/020707
- US-A1- 2009 128 113
- US-A1- 2010 201 336
- US-B1- 6 781 356

## Description

The invention relates to an apparatus for supplying an electric component, in particular an electric component of a vehicle with a constant supply voltage, and in particular to a high-efficiency DC/DC converter supplying at least one electric component connected to that DC/DC converter with a constant supply voltage.

US20090128113 A1 describes a power converter having an auto conversion function for a pulse skip mode. The electric component is connectable to the DC/DC converter to be supplied with a constant supply voltage.

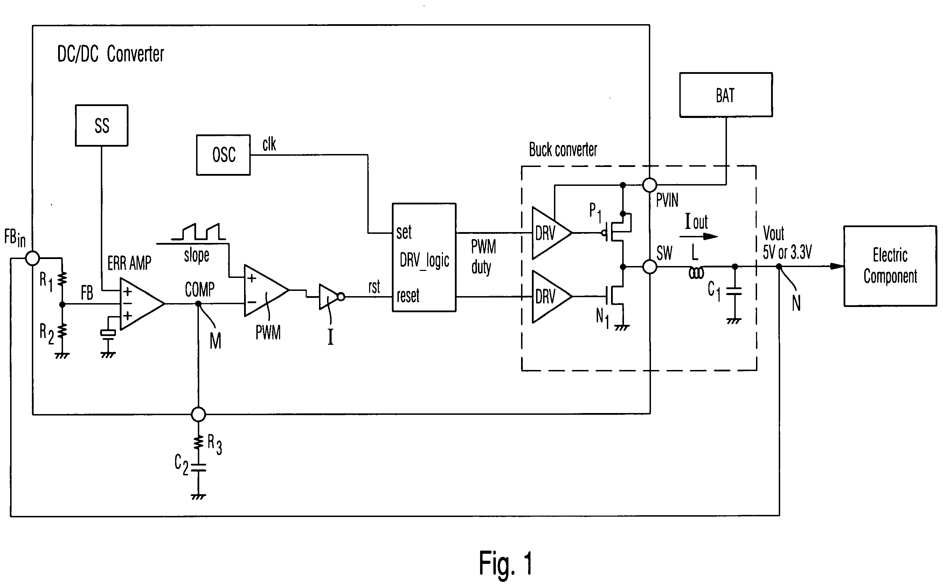

Fig. 1 shows a block diagram of a conventional DC/DC converter which can be used for providing an electric component with a constant DC supply voltage. The DC/DC converter can be formed by an integrated circuit as shown in Fig. 1 to which external discrete components can be connected. The input terminal of the DC/DC converter can be connected to a battery, such as a car battery, and provides a switching output power signal via a coil L and a buffer capacitor C to a node N to which at least one electric component of the vehicle can be connected. In the shown arrangement, the DC/DC converter comprises a so-called buck converter having two complementary power MOSFETs each driven by a corresponding driving circuit. The driving circuits receive a pulse-width modulated (PWM) duty cycle signal from a driver logic having a set and a reset input. The driver logic receives a clock signal CLK from an integrated oscillator of the DC/DC converter. In the conventional arrangement shown in Fig. 1, the output supply voltage is fed back from the node N to the feedback input terminal FBᵢₙ of the DC/DC converter wherein the applied feedback voltage is divided by two resistors R1, R2 and applied to the input of a transconductance amplifier of the DC/DC converter. The inputs of the transconductance amplifier are connected to a Soft start control circuit SS and a reference voltage generator as shown in Fig. 1. The transconductance amplifier provides a comparator signal at a node M being connected to an external resistor R3 and a capacitor C2. An integrated comparator circuit of the DC/DC converter compares the output signal of the transconductance amplifier to a slope signal to provide an upper signal which is inverted by an inverter I and applied to the reset input of the driver logic.

In the conventional DC/DC converter as shown in Fig. 1, the power devices or power MOSFETs P1, N1 which are switched periodically with a frequency in response to clock signal CLK independent from the load of the electric component connected to the switching output terminal SW of the DC/DC converter. The conventional DC/DC converter is therefore optimized for a full load operation of the respective electric component. The electric component shown in Fig. 1 can be, for example, an electric component of a vehicle or a car such as a car radio, a display or an instrument panel. Such a kind of electric component can be switched to a standby mode -wherein the normal operation load of the electric component is reduced to a lower standby load. In the conventional DC/DC converter as shown in Fig. 1, such a change of the load of the electric component is not detected and the power MOSFETs are periodically switched and consume energy. Accordingly, the efficiency of the conventional DC/DC converter as shown in Fig. 1 is low in particular for low output currents applied to the electric component.

Accordingly, it is an object of the present invention to provide a method and an apparatus for supplying an electric component with a constant supply voltage in an energy-efficient manner in particular for low output current conditions.

This object is achieved by an apparatus comprising the features of claim 1.

Possible embodiments of the apparatus are defined in the subclaims.

In a possible embodiment of the high efficiency DC/DC converter according to the present invention, an output supply voltage output by the DC/DC converter is fed back and compared by said load detection circuit with a slope signal to detect the load of the electric component.

In a possible embodiment of the high-efficiency DC/DC converter according to the present invention, the DC/DC converter comprises at least one output power device supplied with a supply voltage by a constant voltage source connected to the DC/DC converter.

In a possible embodiment of the high-efficiency DC/DC converter according to the present invention, the output power device is driven by a corresponding driving circuit which receives a pulse width modulated (PWM) duty signal from a driver logic of said DC/DC converter.

In a possible embodiment of the high-efficiency DC/DC converter according to the present invention, the DC/DC converter comprises a buck converter having two complementary switchable power MOSFETS each driven by a corresponding driving circuit which receives the pulse-width modulated (PWM) duty signal from the driver logic of said DC/DC converter.

In a still further possible embodiment of the high-efficiency DC/DC converter according to the present invention, a voltage supplied by said output power devices to said electric component is fed back to a transconductance amplifier which outputs a comparator voltage.

In a possible embodiment of the high-efficiency DC/DC converter according to the present invention, the comparator voltage output by the transconductance amplifier is compared by a comparator with a slope signal to provide a reset signal for the driver logic.

In a possible embodiment of the high-efficiency DC/DC converter according to the present invention, the comparator can be formed by a PWM comparator circuit.

In a possible embodiment of the high-efficiency DC/DC converter according to the present invention, the DC/DC converter comprises an oscillator which generates a clock signal applied to the driver logic and applied to a time-out-period counter which receives the pulse-width modulated (PWM) duty signal from said driver logic.

In a further possible implementation of the high-efficiency DC/DC converter according to the present invention, the DC/DC converter further comprises a latch circuit having a set input connected to said comparator for receiving the inverted reset signal applied to the driver logic and having a reset input connected to said time-out-period counter and having an output connected to an NOR gate which provides a mode-control signal indicating whether the DC/DC converter is in a light-load operation mode or in a normal operation mode.

In a possible embodiment of the high-efficiency DC/DC converter according to the present invention, the NOR gate comprises a further input connected to a soft-start control circuit for receiving a soft start control signal and an input connected to the time-out-period counter.

In a further possible embodiment of the high-efficiency DC/DC converter according to the present invention, the mode control signal provided by said NOR gate is applied to a NOR gate which combines the mode control signal with the output signal of the comparator to generate the reset signal for said driver logic.

In a possible embodiment of the high efficiency DC/DC converter according the present invention, the said two complementary switchable power MOSFET's are kept in non-conductive state in response to said mode control signal during the light load operation mode of said DC/DC converter.

In a possible embodiment of the high-efficiency DC/DC converter according to the present invention, the oscillator and the soft-start control circuit are switched off at least partially in response to the mode control signal during the light-load operation mode of said DC/DC converter.

In a possible embodiment of the high-efficiency DC/DC converter according to the present invention, the transconductance amplifier is connected to said soft-start control circuit and to a reference voltage generator.

In a possible embodiment of the high-efficiency DC/DC converter, the constant voltage source connected to the DC/DC converter for supplying the output power devices of said DC/DC converter with a supply voltage is formed by a car battery.

In a possible embodiment of the high-efficiency DC/DC converter according to the present invention, the electric component connected to the high-efficiency DC/DC converter is provided within a vehicle and does comprise a low load in a standby operation mode of the respective electric component.

In a possible embodiment of the high-efficiency DC/DC converter according to the present invention, the slope signal is generated by a signal generator integrated in said DC/DC converter.

The invention further provides use of a DC/DC converter according to claim 16.

In the following, possible embodiments of the apparatus and the method according to the present invention are described in more detail with reference to the enclosed figures.
Fig. 1 shows a block diagram of a conventional DC/DC converter;
Fig. 2 shows a block diagram of a possible implementation of a high-efficiency DC/DC converter according to the present invention;
Figs. 3A, 3B show signal diagrams for illustrating the operation of a high-efficiency DC/DC converter according to the present invention;
Fig. 4 shows a diagram for illustrating the efficiency of a DC/DC converter according to the present invention in comparison to a conventional DC/DC converter;
Fig. 5 shows a flowchart to illustrate a possible embodiment of a method for supplying an electric component with a constant supply voltage according to the present invention;
Fig. 6 shows a circuit diagram of a possible implementation of a time-out-counter as used by a DC/DC converter according to the present invention.

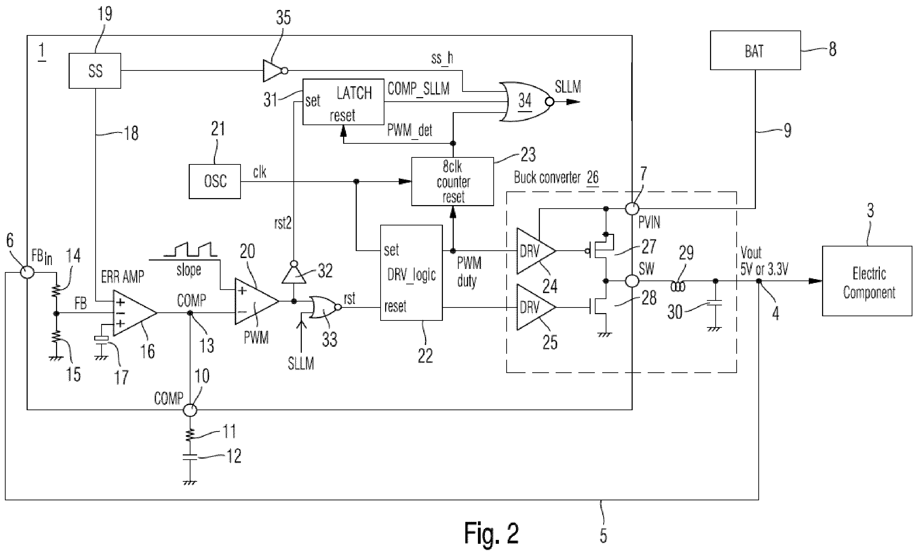

As can be seen in Fig. 2, a DC/DC converter 1 according to the present invention comprises in the shown implementation an output terminal 2 connected to an inductor (29) and a capacitor (30) generating an output supply voltage Vout (4) to an electric component 3 wherein the high-efficiency DC/DC converter 1 according to the present invention as shown in Fig. 2 is provided for supplying at least one electric component 3 with a constant supply voltage. For example, the constant supply voltage is in a range between 3.3 and 5 V.

The DC/DC converter 1 according to the present invention as shown in Fig. 2 comprises a detection circuitry which can detect the current load of the electric component 3 connected to the output terminal 2 of the DC/DC converter 1. The DC/DC converter 1 switches to an energy-saving light load operation mode SLLM, if the load detection circuit of the DC/DC converter 1 detects that the load of the electric component 3 is low. As can be seen in Fig. 2, the output supply voltage Vₒᵤₜ of the DC/DC converter 1 is fed back at a node 4 via a signal feedback line 5 to a feedback input terminal 6 of said DC/DC converter 1. As can be seen in Fig. 2, the DC/DC converter 1 can be formed by a DC/DC converter chip provided for connecting external discrete components to the DC/DC converter chip. In the shown embodiment, the DC/DC converter chip 1 further comprises an input terminal 7 for connecting a voltage source 8 such as a battery via the voltage supply line 9 to the DC/DC converter 1. The DC/DC converter chip 1 further comprises a terminal 10 for connecting a resistor 11 and a capacitor 12 to a signal comparator node 13 provided within the DC/DC converter chip 1.

In an alternative embodiment the resistor 11 and capacitor 12 can be replaced by a single capacitor or replaced by a network comprising of multiple resistors and capacitors.

The feed-back output voltage Vₒᵤₜ supplied to the input terminal 6 of the DC/DC converter 1 can be divided by two resistors 14, 15 and is applied to the negative input of a transconductance amplifier 16 as shown in Fig. 2. The transconductance amplifier 16 outputs a current to the external capacitor 12 to provide a comparator voltage at the internal node 13 of the DC/DC converter chip 1. The transconductance amplifier 16 can comprise a high gain of e.g. 80 dB. The transconductance amplifier 16 is connected to a reference voltage generator 17 generating a reference voltage V_{ref} applied to the transconductance amplifier 16.

In the implementation of Fig. 2, the transconductance amplifier 16 further comprises a postive input which is connected via a signal line 18 to a soft start control circuit 19. If the provided feedback voltage FBᵢₙ is lower than the reference voltage provided by the reference voltage generator 17, it is detected that the output voltage Vₒᵤₜ at node 4 is too low and the transconductance amplifier 16 generates a positive output current loading the external capacitor 12. In contrast, if the divided feedback voltage FB is higher than the reference voltage, the transconductance amplifier 16 generates a negative output current de-loading the external capacitor 12 and reducing the comparator voltage at the internal node 13 of the DC/DC converter chip 1. The generated voltage at node 13 is compared by a comparator 20 of the DC/DC converter 1. The comparator 20 is formed by a PWM comparator comparing the comparator voltage at node 13 with a slope signal supplied to the comparator 20.

In a possible embodiment, the slope signal can be generated by an internal signal generator of the DC/DC converter chip 1.

In an alternative embodiment, the slope signal is supplied to the DC/DC converter 1 by an external slope signal generator. As can be seen in Fig. 2 the slope signal can be a kind of saw-tooth signal applied to the comparator 20.

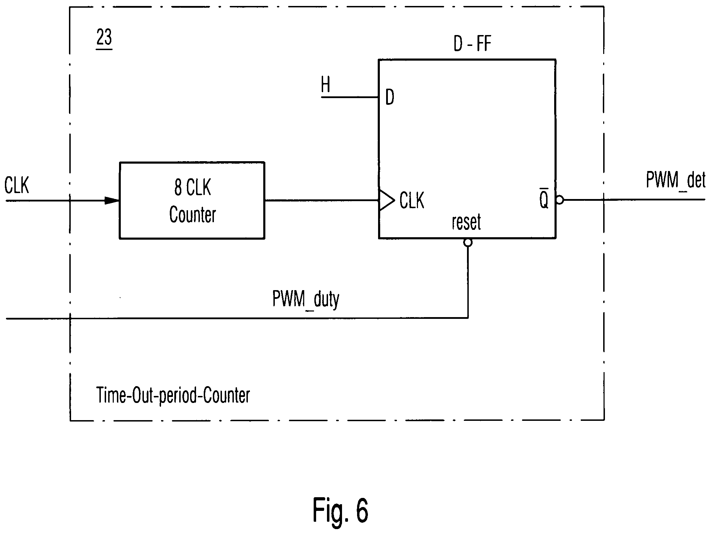

The DC/DC converter 1 according to the present invention further comprises an oscillator circuit 21 which generates a clock signal CLK applied to the input of a driver logic 22 and to a time-out-period counter 23. The driver logic 22 generates the pulse-width modulated PWM duty signal for the driver circuits 24, 25 of a buck converter 26. The pulse-width modulated PWM duty signal is also applied to the time out period counter 23 as shown in Fig. 2. Fig. 6 shows a possible implementation of a time-out-period counter 23 comprising a conventional counter and a D-Flip Flop having its D-input set to high (e.g. 4,5 volts).

The buck converter 26 comprises in the shown embodiment of Fig. 2 two complementary switchable power MOSFETs 27, 28 driven by a corresponding driving circuit 24, 25 wherein each driving circuit 24, 25 receives the pulse-width modulated PWM duty signal from the driver logic 22 of the DC/DC converter 1. The power devices 27, 28 are connected to the output switch terminal 2 of the DC/DC converter 1.

In the shown embodiment, the output switch terminal 2 is connected via an inductor 29 to the external electric component 3. Further, a buffer capacitor 30 is provided for buffering the output voltage supplied to the electric component 3. As can be seen in Fig. 2, the supply voltage for the power devices 27, 28 is provided by the external battery 8. The clock signal generated by the oscillator 21 is supplied to the time out period counter 23 and to the set input of the driver logic 22.

As can be seen in Fig. 2, the DC/DC converter 1 further comprises a latch circuit 31 having a set input and a reset input. The comparator 20 comparing the comparator voltage at node 13 with the slope signal provides a reset signal which is inverted by an inverter circuit 32 and applied to the set input of the latch circuit 31. The reset signal provided by the comparator 20 is further applied to a NOR gate 33 which combines the reset signal with an operation mode control signal SLLM indicating whether the DC/DC converter 1 is in a light load operation mode or in a normal operation mode. The mode control signal SLLM is generated by means of an NOR gate 34. The set input of the latch circuit 31 is connected to the inverter 32 and receives the inverted reset signal provided by the comparator 20. Furthermore, the latch circuit 31 has a reset input connected to the time-out-period counter 23. The latch circuit 31 further comprises an output connected to the NOR gate 34, wherein the NOR gate 34 provides the mode control signal indicating whether the DC/DC converter 1 is in the light-load operation mode or in a normal operation mode. The NOR gate 34 has a further input being connected to the soft start control circuit 19 via an inverter 35 as shown in Fig. 2. The NOR gate 34 can receive an inverted a soft start control signal from the soft start control circuit 19. A third input of the NOR gate 34 is connected to the output of the time-out-period counter 23 to receive a detection signal. The mode control signal provided by the NOR gate 34 is supplied to the NOR gate 33 as can be seen in Fig. 2. The NOR gate 33 combines the mode control signal with the output signal of the comparator 20 to generate the reset signal for the driver logic 22 in effect preventing the power MOSFETs 27, 28 and the corresponding driver circuits 24,25 from switching in order to reduce energy consumption.

The generated mode control signal provided by the NOR gate 34 can further be used for switching internal components of the DC/DC converter 1 in particular to reduce energy consumption of these internal components or circuits.

In a possible embodiment, the oscillator 21 is switched off at least partially in response to the mode control signal SLLM in the light-load operation mode of the DC/DC converter 1.

In a further possible embodiment, also the Soft start control circuit 19 is at least partially switched off in response to the mode control signal during the light-load operation mode of the DC/DC converter 1.

In the light-load operation mode of the DC/DC converter 1, the current consumption can therefore be reduced significantly, e.g. by up to 90% thus increasing the performance and efficiency of the DC/DC converter 1.

Fig. 2 shows an exemplary embodiment of the DC/DC converter 1 arrangement according to the present invention. In a possible further embodiment, the supply voltage supplied to the input terminal 7 can be provided by a battery 8, for example a car battery. Other DC supply voltage sources can also be used wherein the supply voltage is supplied e.g. via a supply voltage network. In the shown exemplary implementation the DC/DC converter 1 comprises a buck converter 26.

Further conversion circuits can be used as well such as a flyback DC/DC converter, a sepic DC/DC converter or a boost converter.

According to the implementation of Fig. 2, the buck converter 26 comprises complementary power MOSFETs 27, 28. In an alternative embodiment, other power devices can be used as well.

In the embodiment as shown in Fig. 2, the power devices, e.g. the power MOSFETs 27, 28, are integrated in the DC/DC converter chip 1. In an alternative embodiment, the power devices 27, 28 can be formed by discrete components connected to the DC/DC converter chip 1.

In the shown embodiment of Fig. 2, the DC/DC converter chip 1 is connected via a supply line to the electric component 3.

In an alternative possible implementation of the DC/DC converter 1, the DC/DC converter chip 1 is integrated in the respective electric component 3.

In another possible embodiment, the electric component 3 can be switched between different operation modes. It can be switched in a possible embodiment to a standby operation mode having a low load which can be detected by the detection circuit of the DC/DC converter 1.

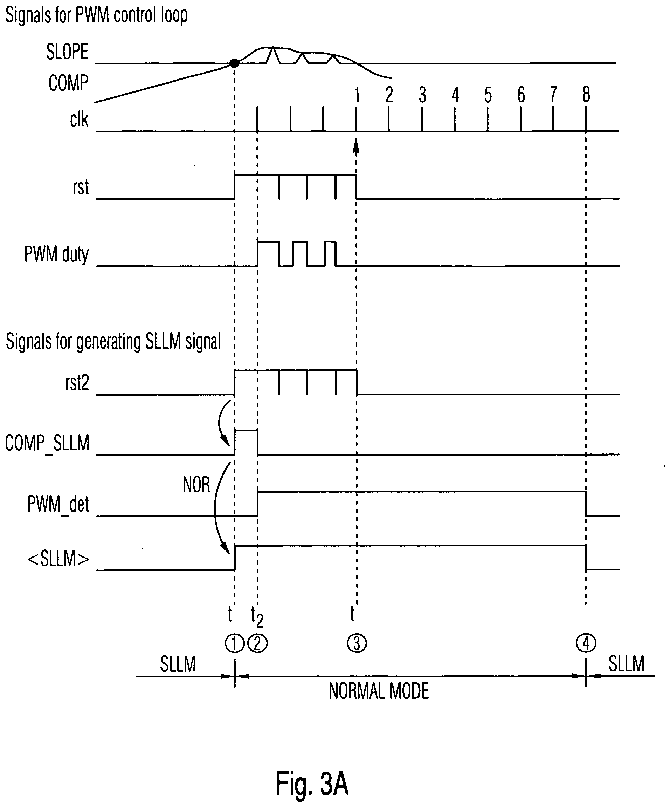

Fig. 3A shows signal diagrams for illustrating the operation of a high-efficiency DC/DC converter 1 according to the present invention as shown in the exemplary implementation of Fig. 2.

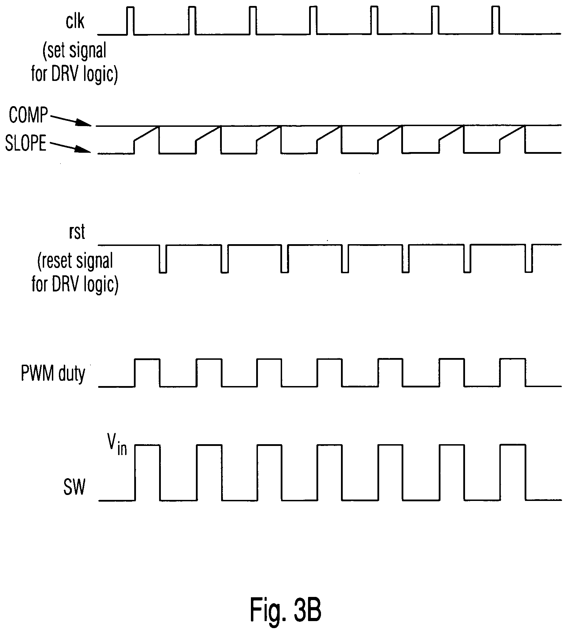

As can be seen in Fig. 3B, the slope signal can comprise a saw tooth form compared by the PWM comparator 20 with a comparator voltage provided at node 13 of the DC/DC converter 1.

In the example of Fig. 3A, the arrangement is at the beginning in the light-load operation mode and the output voltage provided by the DC/DC converter 1 is lower than a predetermined set output voltage Vₒᵤₜ necessary for supplying the electric component 3. When the comparator voltage COMP reaches the slope voltage the comparator 20 generates the set signal rst2 supplied to the set input of the latch circuit 31. The signal at the output of the latch circuit 31 switches the operation mode control signal SLLM of the DC/DC converter 1 to logical high indicating in the given embodiment a normal operation mode of the DC/DC converter 1.

In the given implementation, the operation mode control signal SLLM is high in the light load operation mode, i.e. in the energy-saving mode whereas the operation mode control signal SLLM is low when the DC/DC converter 1 is in the normal operation mode. When having switched into the normal operation mode at t1, the PWM control loop continues to operate the driver logic 22 which receives a set signal from the oscillator 21 and a reset signal from the PWM comparator 20. The PWM detection signal output by the time-out-period counter 23 is switched to a logical high at t2 by the rising edge of the PWM duty signal being output by the driving logic 22. The comp-SLLM signal becomes logical low, because the PWM detection signal output by time-out counter 23 forms a reset signal for the latch circuit 31. Further, the operation mode control signal SLLM remains logical low, as long as the PWM detection signal is high.

Between t2 and t3, the power switching devices 27, 28 are switched according to the PWM duty signal in a normal operation mode. When the comparator signal COMP provided at node 13 falls under the slope voltage, the time-out-period counter 23 starts counting and is triggered by the clock signal provided by the oscillator 21.

As shown in the specific exemplary embodiment, the time-out-period counter 23 counts up to 8, i.e. at time t4 after eight clock cycles the PWM detection signal is reset, and the operation mode control signal SLLM returns to a logic high value indicating that the DC/DC converter 1 is now in the energy-saving light-load operation mode. In the light-load operation mode, when the SLLM signal is high in the shown implementation, at least one component within the DC/DC converter 1 can be switched off at least partially to reduce a current power consumption and to save energy, thus increasing the overall performance of the DC/DC converter arrangement according to the present invention.

In a possible embodiment, the oscillator 21 is partially switched off in response to the operation mode control signal SLLM in the light-load operation mode of the DC/DC converter 1, i.e. when the SLLM signal is high in the shown implementation.

In a further possible embodiment, also the soft start control circuit 19 is at least partially switched off in response to the operation mode control signal SLLM during the light-load operation mode of the DC/DC converter 1.

In a possible embodiment, the oscillation circuit 21 as well as the soft start control circuit 19 are only active in the normal operation mode between time t1 and t4 in the shown exemplary embodiment as illustrated by Fig. 3A.

In the embodiment illustrated by Fig. 3A, the number of clock cycles counted by the time-out period counter 23 is eight.

In a further embodiment, the time-out-period counter 23 does not count up to eight, but up to an adjustable number, such as 6, etc. By increasing the number of clock cycles, the time-out period between t3 and t4 is increased reducing the efficiency. In contrast by reducing the number of counter cycles, the time-out period is reduced increasing the efficiency, however reducing to some extent the functionality of the circuit. The duration of the normal operation mode between t1 and t4 including the duration of the time-out period can be, for example, about 20 µsec in a possible embodiment. The duration time of the light-load operation mode between t4 and the next t1 can be much longer, for example 100 ms. In the light load operation mode some components of the DC/DC converter 1 are at least partially switched off or completely switched off, so that the current consumption of the DC/DC converter 1 can be significantly reduced thus increasing the efficiency and performance of the circuit.

Fig. 3B illustrates the operation of the DC/DC converter 1 in the normal operation mode.

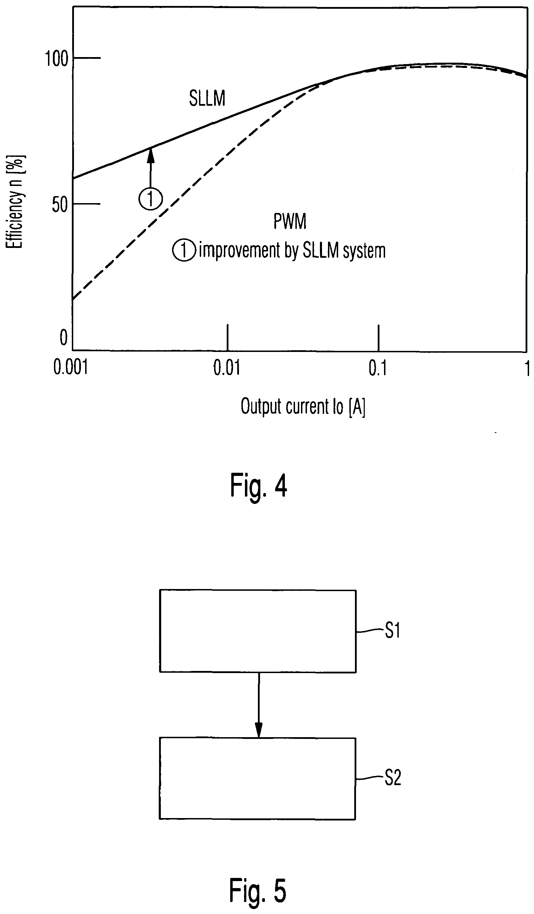

Fig. 4 shows a diagram for illustrating the efficiency of the DC/DC converter 1 according to the present invention in comparison to a conventional DC/DC converter. In the diagram of Fig. 4, the efficiency η is shown depending on the output current I₀ supplied by the DC/DC converter 1 to the electric component 3. As can be seen especially for a low output current I₀, the efficiency of the DC/DC converter 1 switching to the light-load operation mode SLLM is much higher than provided by the conventional converter arrangement. By reducing the switching operation, the power dissipation decreases and the efficiency is increased.

Fig. 5 shows a simple flowchart for illustrating an embodiment of a method for supplying an electric component with a constant supply voltage by a DC/DC converter according to the present invention.

In a first step S1, the load of the electric component 3 is detected by a load detection circuit of the DC/DC converter 1.

In a further step S2, the DC/DC converter 1 is switched to an energy-saving light-load operation mode, if the detected load of the electric component 3 is low.

The method as shown in Fig. 5, is implemented in a possible embodiment by a hard-wired DC/DC converter 1 as shown in the specific implementation of Fig. 2.

In other possible implementations the method as shown in Fig. 5 is implemented in other ways. It is possible that the method as shown in Fig. 2 is implemented by employing a control program which detects a load of the electric component 3 and switches a DC/DC converter in an energy-saving light-load operation mode, if the detected load of the electric component 3 is low. The detection of the load of the electric component 3 can be performed in different ways, for example by use of corresponding sensor circuitry.

In a possible embodiment, the control program can be executed by an execution unit comprising, for example, a microcomputer or a microcontroller. In an embodiment, such a microcontroller can be integrated in the DC/DC converter 1.

The DC/DC converter 1 in accordance with the present invention as shown in the implementation of Fig. 2, can in a possible embodiment be integrated into corresponding electric component 3. It is also possible that the DC/DC converter 1 supplies a plurality of electric components 3 which are connected in parallel to an output of the DC/DC converter 1.

In a further possible embodiment, the DC/DC converter 1 can also be integrated in the battery 8, for example in a car battery 8 of a vehicle.

In a further possible embodiment, the DC/DC converter 1 can be formed by a separate device which can be connected between a battery 8 and an electrical component 3. The electric component 3 can, for example, be an electric component of a vehicle.

In an alternative embodiment, it is also possible that the electric component 3 is part of other devices, for example other mobile devices which are supplied by a constant supply voltage.

## Claims

1. A DC/DC converter for supplying at least one electric component (3) connected to said DC/DC converter (1) with a constant supply voltage, the converter comprising
at least one output power device (27, 28) adapted to supply the output supply voltage to said electric component (3);
a transconductance amplifier (16), for receiving said output supply voltage as a feedback signal and configured to provide a comparator voltage (COMP);
a load detection circuit comprising a comparator (20) adapted to compare the comparator voltage (COMP) with a slope voltage of a slope signal and to provide a reset signal when the comparator voltage (COMP) reaches the slope voltage; the DC/DC converter **characterized in that** it further comprises:
an inverter circuit (32) adapted to invert said reset signal to provide an inverted reset signal (rst2);
a latch circuit (31) having a set input connected to said comparator (20) for receiving said inverted reset signal (rst2), and a reset input connected to a time-out period counter (23) and having an output connected to a NOR-gate (34) for providing a mode control signal, said mode control signal indicating whether the DC/DC converter (1) is in an energy saving light load operation mode (SLLM) or in a normal operation mode (NM),
wherein said DC/DC converter (1) is configured to switch to the energy saving light load operation mode (SLLM) if the load detection circuit detects that the load of said electric component (3) is low, based on the mode control signal.

2. The DC/DC converter according to claim 1, wherein said transconductance amplifier (16) is adapted to load a capacitor (12) if the feedback supply voltage is higher than the reference voltage and to deload the capacitor (12) if the feedback supply voltage is lower than the reference voltage.

3. The DC/DC converter according to any of the preceding claims 1 or 2, wherein said at least one output power device (27, 28) is adapted to be supplied with a supply voltage by a constant voltage source (8) connected to said DC/DC converter (1) and driven by a corresponding driving circuit (24, 25) which receives a pulse width modulated (PWM) duty signal from a driver logic (22) of said DC/DC converter (1).

4. The DC/DC converter according to claim 3, wherein said DC/DC converter (1) comprises a buck converter (26) having two complementary switchable power MOSFETs (27, 28) each driven by a corresponding driving circuit (24, 25) which is adapted to receive the pulse width modulated (PWM) duty signal from the driver logic (22) of said DC/DC converter (1).

5. The DC/DC converter according to claim 3 or 4, further comprising an oscillator circuit (21) which is configured to generate a clock signal (CLK) applied to the driver logic (22) and to a time-out period counter (23) which is configured to receive the pulse width modulated (PWM) duty signal from said driver logic (22).

6. The DC/DC converter according to claim 5, wherein said NOR-gate (34) comprises a further input connected to a soft start control circuit (19) for receiving a soft start control signal and an input connected to said time-out period counter (23).

7. The DC/DC converter according to one of the preceding claims 3 to 6, wherein the NOR-gate (34) is configured to apply said mode control signal to a further NOR-gate (33) which is configured to combine the mode control signal with the reset signal provided by said comparator (20) to generate the reset signal (rst) for said driver logic (22).

8. The DC/DC converter according to one of the preceding claims 4 to 7, wherein the two complementary switchable power MOSFET's (27, 28) are configured to be kept in non-conductive state in response to said mode control signal during the light load operation mode of said DC/DC converter (1).

9. The DC/DC converter according to one of the preceding claims 5 to 8, wherein the oscillator circuit (21) and the soft start control circuit (19) are configured to be switched off at least partially in response to said mode control signal during the light load operation mode of said DC/DC converter (1).

10. The DC/DC converter according to one of the preceding claims 6 to 9, wherein the tranconductance amplifier (16) has an input connected to said soft start control circuit (19) and an input connected to said reference voltage generator (17).

11. The DC/DC converter according to one of the preceding claims 2 to 10, wherein said constant voltage source (8) for supplying said output power devices (27, 28) of said DC/DC converter (1) with a supply voltage is a car battery.

12. The DC/DC converter according to one of the preceding claims 1 to 11, wherein said electric component (3) connected to said DC/DC converter (1) is adapted to be provided within a vehicle and does comprise a low load in a stand-by operation mode.

13. The DC/DC converter according to one of the preceding claims 1 to 12, further comprising a signal generator for generating said slope signal.

14. Use of a DC/DC converter (1) as defined in any of the preceding claims 1 to 13 to supply an electric component (3) with a constant supply voltage.

## Patentansprüche

1. Gleichstrom/Gleichstrom-Wandler zum Versorgen mindestens einer elektrischen Komponente (3), die mit dem Gleichstrom/Gleichstrom-Wandler (1) verbunden ist, mit einer konstanten Versorgungsspannung, wobei der Wandler Folgendes umfasst:
mindestens eine Ausgangsleistungsvorrichtung (27, 28), die dafür ausgelegt ist, die elektrische Komponente (3) mit der Ausgangsversorgungsspannung zu versorgen;
einen Transkonduktanzverstärker (16) zum Empfangen der Ausgangsversorgungsspannung als ein Rückkopplungssignal, und dafür ausgebildet, eine Komparatorspannung (COMP) bereitzustellen;
eine Lastdetektionsschaltung, die einen Komparator (20) umfasst, der dafür ausgelegt ist, die Komparatorspannung (COMP) mit einer Rampenspannung eines Rampensignal zu vergleichen und ein Rücksetzungssignal bereitzustellen, wenn die Komparatorspannung (COMP) die Rampenspannung erreicht;
wobei der Gleichstrom/Gleichstrom-Wandler **dadurch gekennzeichnet ist, dass** er des Weiteren Folgendes umfasst:
eine Inverterschaltung (32), die dafür ausgelegt ist, das Rücksetzungssignal zu invertieren, um ein invertiertes Rücksetzungssignal (rst2) bereitzustellen;
eine Verriegelungsschaltung (31), die einen Einstelleingang hat, der mit dem Komparator (20) verbunden ist, um das invertierte Rücksetzungssignal (rst2) zu empfangen, und einen Rücksetzungseingang hat, der mit einem Timeout-Zeitraum-Zähler (23) verbunden ist und einen Ausgang hat, der mit einem NOR-Gatter (34) verbunden ist, um ein Modussteuersignal bereitzustellen, wobei das Modussteuersignal anzeigt, ob der Gleichstrom/Gleichstrom-Wandler (1) in einem energiesparenden Leichtlastbetriebsmodus (SLLM) oder in einem normalen Betriebsmodus (NM) ist, wobei der Gleichstrom/Gleichstrom-Wandler (1) dafür ausgebildet ist, auf der Basis des Modussteuersignals in den energiesparenden Leichtlastbetriebsmodus (SLLM) umzuschalten, falls die Lastdetektionsschaltung detektiert, dass die Last der elektrischen Komponente (3) niedrig ist.

2. Gleichstrom/Gleichstrom-Wandler nach Anspruch 1, wobei der Transkonduktanzverstärker (16) dafür ausgelegt ist, einen Kondensator (12) zu laden, falls die Rückkopplungsversorgungsspannung größer ist als die Referenzspannung, und den Kondensator (12) zu entladen, falls die Rückkopplungsversorgungsspannung niedriger ist als die Referenzspannung.

3. Gleichstrom/Gleichstrom-Wandler nach einem der vorangehenden Ansprüche 1 oder 2, wobei die mindestens eine Ausgangsleistungsvorrichtung (27, 28) dafür ausgelegt ist, durch eine Konstantspannungsquelle (8), die mit dem Gleichstrom/Gleichstrom-Wandler (1) verbunden ist und durch eine entsprechende Ansteuerschaltung (24, 25), die ein impulsbreitenmoduliertes (PWM) Arbeitssignal von einer Ansteuerungslogik (22) der Gleichstrom/Gleichstrom-Wandler (1) empfängt, angesteuert wird, mit einer Versorgungsspannung versorgt zu werden.

4. Gleichstrom/Gleichstrom-Wandler nach Anspruch 3, wobei der Gleichstrom/Gleichstrom-Wandler (1) einen Abwärtswandler (26) umfasst, der zwei komplementäre schaltbare Leistungs-MOSFETs (27, 28) hat, die jeweils durch eine entsprechende Ansteuerschaltung (24, 25) angesteuert werden, die dafür ausgelegt ist, das impulsbreitenmodulierte (PWM) Arbeitssignal von der Ansteuerungslogik (22) des Gleichstrom/Gleichstrom-Wandlers (1) zu empfangen.

5. Gleichstrom/Gleichstrom-Wandler nach Anspruch 3 oder 4, der des Weiteren eine Oszillatorschaltung (21) umfasst, die dafür ausgebildet ist, ein Taktsignal (CLK) zu generieren, das in die Ansteuerungslogik (22) und einen Timeout-Zeitraum-Zähler (23) eingespeist wird, der dafür ausgebildet ist, das impulsbreitenmodulierte (PWM) Arbeitssignal von der Ansteuerungslogik (22) zu empfangen.

6. Gleichstrom/Gleichstrom-Wandler nach Anspruch 5, wobei das NOR-Gatter (34) einen weiteren Eingang umfasst, der mit einer Softstart-Steuerschaltung (19) verbunden ist, um ein Softstart-Steuersignal zu empfangen, und einen Eingang umfasst, der mit dem Timeout-Zeitraum-Zähler (23) verbunden ist.

7. Gleichstrom/Gleichstrom-Wandler nach einem der vorangehenden Ansprüche 3 bis 6, wobei das NOR-Gatter (34) dafür ausgebildet ist, das Modussteuersignal an ein weiteres NOR-Gatter (33) anzulegen, das dafür ausgebildet ist, das Modussteuersignal mit dem durch den Komparator (20) bereitgestellten Rücksetzungssignal zu kombinieren, um das Rücksetzungssignal (rst) für die Ansteuerungslogik (22) zu generieren.

8. Gleichstrom/Gleichstrom-Wandler nach einem der vorangehenden Ansprüche 4 bis 7, wobei die zwei komplementären schaltbaren Leistungs-MOSFETs (27, 28) dafür ausgebildet sind, in Reaktion auf das Modussteuersignal während des Leichtlastbetriebsmodus des Gleichstrom/Gleichstrom-Wandlers (1) in einem nichtleitenden Zustand gehalten zu werden.

9. Gleichstrom/Gleichstrom-Wandler nach einem der vorangehenden Ansprüche 5 bis 8, wobei die Oszillatorschaltung (21) und die Softstart-Steuerschaltung (19) dafür ausgebildet sind, in Reaktion auf das Modussteuersignal während des Leichtlastbetriebsmodus des Gleichstrom/Gleichstrom-Wandlers (1) mindestens teilweise abgeschaltet zu werden.

10. Gleichstrom/Gleichstrom-Wandler nach einem der vorangehenden Ansprüche 6 bis 9, wobei der Transkonduktanzverstärker (16) einen Eingang hat, der mit der Softstart-Steuerschaltung (19) verbunden ist, und einen Eingang hat, der mit dem Referenzspannungsgenerator (17) verbunden ist.

11. Gleichstrom/Gleichstrom-Wandler nach einem der vorangehenden Ansprüche 2 bis 10, wobei die Konstantspannungsquelle (8) zum Versorgen der Ausgangsleistungsvorrichtungen (27, 28) des Gleichstrom/Gleichstrom-Wandlers (1) mit einer Versorgungsspannung eine Autobatterie ist.

12. Gleichstrom/Gleichstrom-Wandler nach einem der vorangehenden Ansprüche 1 bis 11, wobei die mit dem Gleichstrom/Gleichstrom-Wandler (1) verbundene elektrische Komponente (3) dafür ausgelegt ist, in einem Fahrzeug angeordnet zu werden, und in einem Bereitschaftsbetriebsmodus eine niedrige Last darstellt.

13. Gleichstrom/Gleichstrom-Wandler nach einem der vorangehenden Ansprüche 1 bis 12, der des Weiteren einen Signalgenerator zum Generieren des Rampensignals umfasst.

14. Verwendung des Gleichstrom/Gleichstrom-Wandlers (1) nach einem der vorangehenden Ansprüche 1 bis 13 zum Versorgen einer elektrischen Komponente (3) mit einer konstanten Versorgungsspannung.

## Revendications

1. Convertisseur courant continu/courant continu destiné à alimenter au moins un composant électrique (3) connecté audit convertisseur courant continu/courant continu (1) en une tension d'alimentation constante, le convertisseur comprenant :
au moins un dispositif de sortie de puissance (27, 28) conçu pour fournir la tension d'alimentation de sortie audit composant électrique (3) ;
un amplificateur de transconductance (16) conçu pour recevoir ladite tension d'alimentation de sortie en tant que signal de rétroaction et conçu pour fournir une tension de comparateur (COMP) ;
un circuit de détection de charge comprenant un comparateur (20) conçu pour comparer la tension de comparateur (COMP) avec une tension à pente de signal à pente et pour fournir un signal de remise à zéro lorsque la tension de comparateur (COMP) atteint la tension à pente ;
le convertisseur courant continu/courant continu étant **caractérisé en ce qu'**il comprend en outre :
un circuit inverseur (32) conçu pour inverser ledit signal de remise à zéro pour produire un signal de remise à zéro inversé (rst2) ;
un circuit à verrouillage (31) ayant une entrée de basculement connectée audit comparateur (20) pour recevoir ledit signal de remise à zéro inversé (rst2) et une entrée de remise à zéro connectée à un compteur de période de temporisation (23) et ayant une sortie connectée à une porte NI (34) destinée à fournir un signal de commande de mode, ledit signal de commande de mode indiquant si le convertisseur courant continu/courant continu (1) est dans un mode de fonctionnement à charge légère à économie d'énergie (SLLM) ou dans un mode de fonctionnement normal (NM),
dans lequel ledit convertisseur courant continu/courant continu (1) est conçu pour se commuter sur le mode de fonctionnement à charge légère à économie d'énergie (SLLM) si le circuit de détection de charge détecte que la charge dudit composant électrique (3) est faible, sur la base du signal de commande de mode.

2. Convertisseur courant continu/courant continu selon la revendication 1, dans lequel ledit amplificateur de transconductance (16) est conçu pour charger un condensateur (12) si la tension d'alimentation de rétroaction est supérieure à la tension de référence et pour décharger le condensateur (12) si la tension d'alimentation de rétroaction est inférieure à la tension de référence.

3. Convertisseur courant continu/courant continu selon l'une quelconque des revendications 1 et 2 précédentes, dans lequel ledit ou lesdits dispositif(s) de sortie de puissance (27, 28) est ou sont conçu(s) pour être alimenté(s) en tension d'alimentation par une source de tension constante (8) connectée audit convertisseur courant continu/courant continu (1) et pour être attaqué(s) par un circuit d'attaque correspondant (24, 25) qui reçoit un signal de rapport cyclique à modulation d'impulsions en largeur (PWM) en provenance d'une logique de circuit d'attaque (22) dudit convertisseur courant continu/courant continu (1).

4. Convertisseur courant continu/courant continu selon la revendication 3, dans lequel ledit convertisseur courant continu/courant continu (1) comprend un convertisseur abaisseur de tension (26) ayant deux transistors à effet de champ métal-oxyde semiconducteur de puissance commutables complémentaires (27, 28) attaqués chacun par un circuit d'attaque correspondant (24, 25) qui est conçu pour recevoir le signal de rapport cyclique à modulation d'impulsions en largeur (PWM) en provenance de la logique de circuit d'attaque (22) dudit convertisseur courant continu/courant continu (1).

5. Convertisseur courant continu/courant continu selon la revendication 3 ou 4, comprenant en outre un circuit oscillateur (21) qui est conçu pour produire un signal d'horloge (CLK) appliqué à la logique de circuit d'attaque (22) et à un compteur de période de temporisation (23) qui est conçu pour recevoir le signal de rapport cyclique à modulation d'impulsions en largeur (PWM) en provenance de ladite logique de circuit d'attaque (22).

6. Convertisseur courant continu/courant continu selon la revendication 5, dans lequel ladite porte NI (34) comprend une autre entrée connectée à un circuit de commande de mise sous tension sans appel de courant (19) pour recevoir un signal de commande de mise sous tension sans appel de courant et une entrée connectée audit compteur de période de temporisation (23).

7. Convertisseur courant continu/courant continu selon l'une des revendications 3 à 6 précédentes, dans lequel la porte NI (34) est conçue pour appliquer ledit signal de commande de mode à une autre porte NI (33) qui est conçue pour combiner le signal de commande de mode avec le signal de remise à zéro fourni par ledit comparateur (20) afin de produire le signal de remise à zéro (rst) destiné à ladite logique de circuit d'attaque (22).

8. Convertisseur courant continu/courant continu selon l'une des revendications 4 à 7 précédentes, dans lequel les deux transistors à effet de champ métal-oxyde semiconducteur de puissance commutables complémentaires (27, 28) sont conçus pour être maintenus à l'état non conducteur, en réponse audit signal de commande de mode, sous le mode de fonctionnement à charge légère dudit convertisseur courant continu/courant continu (1).

9. Convertisseur courant continu/courant continu selon l'une des revendications 5 à 8 précédentes, dans lequel le circuit oscillateur (21) et le circuit de commande de mise sous tension sans appel de courant (19) sont conçus pour être mis hors tension au moins en partie en réponse audit signal de commande de mode, sous le mode de fonctionnement à charge légère dudit convertisseur courant continu/courant continu (1).

10. Convertisseur courant continu/courant continu selon l'une des revendications 6 à 9 précédentes, dans lequel l'amplificateur de transconductance (16) a une entrée connectée audit circuit de commande de mise sous tension sans appel de courant (19) et une entrée connectée audit générateur de tension de référence (17).

11. Convertisseur courant continu/courant continu selon l'une des revendications 2 à 10 précédentes, dans lequel ladite source de tension constante (8) destinée à alimenter lesdits dispositifs de sortie de puissance (27, 28) dudit convertisseur courant continu/courant continu (1) en une tension d'alimentation est une batterie de voiture.

12. Convertisseur courant continu/courant continu selon l'une des revendications 1 à 11 précédentes, dans lequel ledit composant électrique (3) connecté audit convertisseur courant continu/courant continu (1) est conçu pour être placé à l'intérieur d'un véhicule et comprend une faible charge dans un mode de fonctionnement d'attente.

13. Convertisseur courant continu/courant continu selon l'une des revendications 1 à 12 précédentes, comprenant en outre un générateur de signaux destiné à produire ledit signal à pente.

14. Utilisation d'un convertisseur courant continu/courant continu (1) tel que défini dans l'une quelconque des revendications 1 à 13 précédentes, pour alimenter un composant électrique (3) en une tension d'alimentation constante.
